# EUROPÄISCHE PATENTANMELDUNG

(11) **EP 2 689 970 A1**
(43) Veröffentlichungstag der Anmeldung: **29.01.2014**
(21) Anmeldenummer: 13173677.9
(22) Anmeldetag: 25.06.2013
(51) Int. Cl.: B60R 16/03, H02H 9/04

(54) **Schaltungsanordnung zum Steuern einer induktiven Last mit Freilaufkreis**

(30) Priorität: 08.07.2012 DE 102012013362; 25.09.2012 DE 102012109011
(71) Anmelder: Zimmer, Manfred, 55452 Rümmelsheim (DE)
(72) Erfinder: Zimmer, Manfred, 55452 Rümmelsheim (DE)
(74) Vertreter: Müller, Jochen

(57) **Zusammenfassung**

Eine Schaltungsanordnung zum Schalten eines induktiven Verbrauchers mittels eines ersten Schalters (S₁) umfaßt eine Freilaufdiode (D₁), die in Reihe zu einem zweiten elektronischen Schalter (S₂) geschaltet ist, sowie einen Kondensator (C₁), der über eine weitere Diode (D₂) in Durchlassrichtung ladbar ist, wobei zu dem Kondensator (C₁) ein Widerstand (R₁) parallel geschaltet und die Schaltungsanordnung derart ausgebildet ist, dass der Kondensator (C₁) geladen wird, wenn der erste Schalter (S₁) geschlossen ist und entladen wird, wenn der erste Schalter (S₁) geöffnet wird.

## Beschreibung

Die Erfindung bezieht sich auf eine Schaltungsanordnung, insbesondere zum Betrieb eines oder mehrerer induktiver Verbraucher.

Aus der DE 103 56 089 B4 ist eine Schaltungsanordnung bekannt, mit der ein elektrischer Verbraucher, wie beispielsweise die Erregerspule eines Kraftstoffeinspritzventils oder eines Anlassermotors, gesteuert wird. Tritt ein mechanischer Defekt in der Stromzuführung auf, dann soll vermieden werden, dass der elektrische Verbraucher unkontrolliert aktiviert wird, vielmehr muss er zum sicheren Betrieb deaktiviert bleiben.

Die DE 10 2011 011 295 A1 offenbart eine Schaltung zum Betrieb eines oder mehrerer induktiver Verbraucher, bei der die Ansteuerung eines zweiten steuerbaren Schaltelements über eine Betriebsspannung erfolgt, wobei eine Zener-Diode in Reihe zwischen der Betriebsspannung und einem Steuereingang des zweiten Schaltelements geschaltet ist.

Im Folgenden wird unter Bezugnahme auf die Figuren darauf verwiesen, dass der dortige Begriff "LOAD" als elektrischer Verbraucher bzw. elektrische Last zu verstehen ist. Dabei kann es sich beispielsweise um die Erregerspule eines Anlassermotors, ein Magnetventil zum Aktivieren einer Differenzialsperre oder eines automatischen Getriebes handeln. Die Symbole in den Zeichnungen sind übliche Symbole aus der Elektrotechnik.

In Geräten oder Systemen zum Betrieb von induktiven Lasten werden häufig Freilaufdioden verwendet, um die nach Abschalten in der Induktivität gespeicherte Energie abzubauen und damit eine sogenannte Demagnetisierung zu erzielen.

Eine Freilaufdiode dient zum Schutz eines mechanischen oder elektronischen Schalters vor einer Überspannung, die beim Abschalten einer von ihm geschalteten induktiven Gleichstromlast erzeugt wird. Eine Halbleiterdiode wird derart parallel zu der zu schaltenden induktiven Gleichstromlast geschaltet, dass sie von einer Speisespannung in Sperrrichtung beansprucht wird. Nach dem Abschalten der Speisespannung sorgt die Selbstinduktion, beispielsweise der Spule, dafür, dass der Strom zunächst in der ursprünglichen Richtung weiter fließt. Ohne die Anordnung der Freilaufdiode führt das Abschalten der Speisespannung zu einer Spannungsspitze, die sich zur Betriebsspannung addiert und die Schaltstrecke beschädigen oder zerstören kann. Mit einer Freilaufdiode wird die Spannungsspitze jedoch auf die Durchlassspannung der Halbleiterdiode, die bei einer Silizium-Diode etwa 0,7 V beträgt, begrenzt, wodurch ein effektiver Überspannungsschutz gegeben ist. Der Strom fließt über die Halbleiterdiode und die Energie des Magnetfeldes wird größtenteils im ohmschen Widerstand der Spule und zu einem geringen Teil in der Halbleiterdiode in Wärme umgewandelt.

Freilaufdioden sind insbesondere dann wichtig, wenn die induktive Last pulsweiten-moduliert betrieben wird (PWM-Betrieb). Bei einem PWM-Betrieb kann wegen des Freilaufs ein zum Tastverhältnis von Ein-/Ausschaltzeit proportionaler mittlerer Strom in der Last eingestellt werden.

Typische induktive Lasten sind beispielsweise Magnetventile, welche in Kraftfahrzeugen, insbesondere in Nutzfahrzeugen Verwendung finden.

Wenn die induktive Last zweipolig mit dem Steuergerät (ECU), beispielsweise des Kraftfahrzeugs, verbunden ist, kann, neben den elektromagnetischen Vorteilen im PWM-Betrieb, im Falle eines Abrisses der Stromzufuhr im Massezweig kein parasitärer Strom zur Last abfließen.

In der Kraftfahrzeugtechnik kommt es häufig vor, dass aus verkabelungstechnischen Gründen die Last nur einpolig mit dem jeweiligen Steuergerät verbunden ist, während der zweite Anschluss der Last mit der System-Masse an einem beliebigen Punkt des Kraftfahrzeuges verbunden ist. Diese Anschlussart hat unter anderem den Nachteil, dass im Falle eines Masseabrisses am Steuergerät ein parasitärer Strom zur Last abfließen und diese unkontrolliert aktivieren kann.

Ausgehend von diesem Stand der Technik liegt der Erfindung die Aufgabe zugrunde, eine Schaltungsanordnung derart zu verbessern, dass eine ungewollte Aktivierung insbesondere einer induktiven Last auch bei technischen Defekten zuverlässig vermieden ist.

Diese Aufgabe wird durch eine Schaltungsanordnung mit den Merkmalen des Anspruchs 1 gelöst. Weiterhin ist eine vorteilhafte Verwendung der Schaltungsanordnung angegeben.

Die Unteransprüche stellen vorteilhafte Ausgestaltungen der Erfindung dar.

Die Erfindung wird im Folgenden anhand von Ausführungsbeispielen unter Bezugnahme auf die Zeichnung näher erläutert. Die Figuren 1 bis 6 dienen dabei zur Erläuterung des Standes der Technik. Dabei zeigen die Figuren der Zeichnung:
- Fig. 1: regulärer Stromfluss bei einem zweipoligen Lastanschluss nach dem Stand der Technik,
- Fig. 2: Stromfluss im Freilauf bei einem zweipoligen Lastanschluss nach dem Stand der Technik,
- Fig. 3: Masseabriss bei einem zweipoligen Lastanschluss nach dem Stand der Technik,
- Fig. 4: regulärer Stromfluss bei einpoligem Lastanschluss nach dem Stand der Technik,
- Fig. 5: Stromfluss im Freilauf bei einem einpoligen Lastanschluss nach dem Stand der Technik,
- Fig. 6: Stromfluss während Masseabriss bei einem einpoligen Lastanschluss nach dem Stand der Technik,
- Fig. 7: Schaltungsanordnung mit einem dynamischen Freilauf nach der Erfindung,
- Fig. 8: regulärer Stromfluss bei einem einpoligen Lastanschluss und dynamisch aktiviertem Freilauf,
- Fig. 9: Stromfluss während dynamisch aktiviertem Freilaufs bei einpoligem Lastanschluss,
- Fig. 10: Stromfluss während Masseabriss bei einpoligem Lastanschluss und dynamisch deaktiviertem Freilauf
- Fig. 11: ein Applikationsbeispiel mit einer dynamischen Freilaufschaltung und
- Fig. 12: Diagramme zur Darstellung des Zusammenhangs zwischen dem Spannungs- und Stromverlauf über der Zeit.

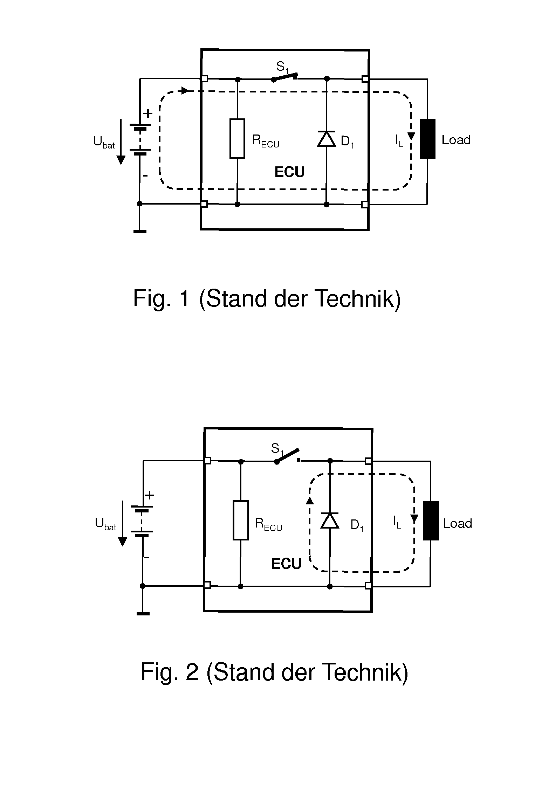

In Fig. 1 ist der reguläre Stromfluss I_{L} bei zweipoligem Lastanschluss dargestellt. Wird die Last zweipolig an einem Steuergerät angeschlossen, dann fließt der Rückwärtsstrom I_{L} über das Steuergerät zurück. Die gestrichelte Linie verdeutlicht dabei den Stromfluss.

Nach Fig. 2 ist der Stromfluss I_{L} im Freilauf bei zweipoligem Lastanschluss durch die gestrichelte Linie dargestellt. Beim Öffnen des Schalters S₁ wird die in der induktiven Last gespeicherte Energie über einen Freilaufpfad abgebaut, demagnetisiert. Bei zweipoligem Lastanschluss ist die sich ausbildende Stromschleife entsprechend klein.

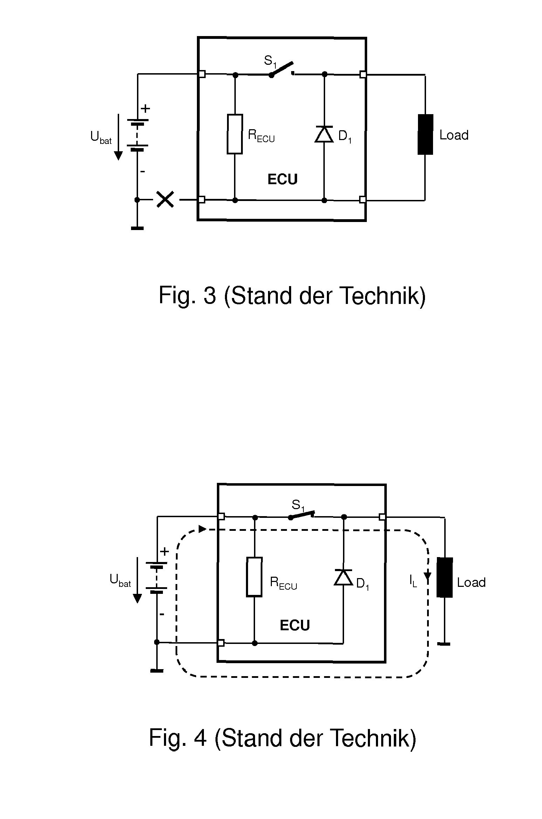

In Fig. 3 ist ein Masseabriss bei zweipoligem Lastanschluss durch das große Kreuz links unten dargestellt. Das bedeutet, dass beispielsweise ein Massekabel aufgrund eines technischen Defekts keinen Kontakt mehr zwischen der Schaltungsanordnung und dem Minuspol der Batterie im Kraftfahrzeug bildet. Bei zweipoligem Lastanschluss wird der Stromfluss bei Masseabriss unterbrochen.

In Fig. 4 ist der reguläre Stromfluss I_{L} bei einpoligem Lastanschluss durch die gestrichelte Linie dargestellt. Ist die Last einpolig mit dem Steuergerät verbunden, fließt der Rückwärtsstrom über die System-Masse zum Minuspol der Batterie ab.

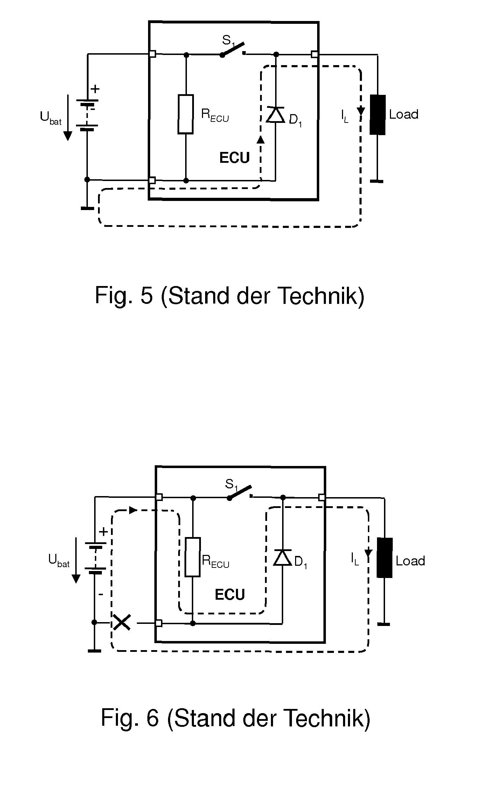

Nach Fig. 5 ist der Stromfluss I_{L} im Freilauf bei einpoligem Lastanschluss durch die gestrichelte Linie dargestellt. Beim Öffnen des Schalters S₁ wird die in der induktiven Last gespeicherte Energie über den Freilaufpfad abgebaut (demagnetisiert). Bei einpoligem Lastanschluss ist die sich ausbildende Stromschleife entsprechend groß.

Gemäß Fig. 6 ist der Stromfluss I_{L} während Masseabriss bei einpoligem Lastanschluss durch die gestrichelte Linie dargestellt. Bei einpoligem Lastanschluss fließt dieser gewisse parasitäre Strom über das Steuergerät (ECU) und die Freilaufdiode D₁ zur Last und System-Masse ab. Der sich ausbildende Strom ist abhängig vom Innerwiderstand R_{ECU} des Steuergerätes und kann die angeschlossene Last ungewollt aktivieren.

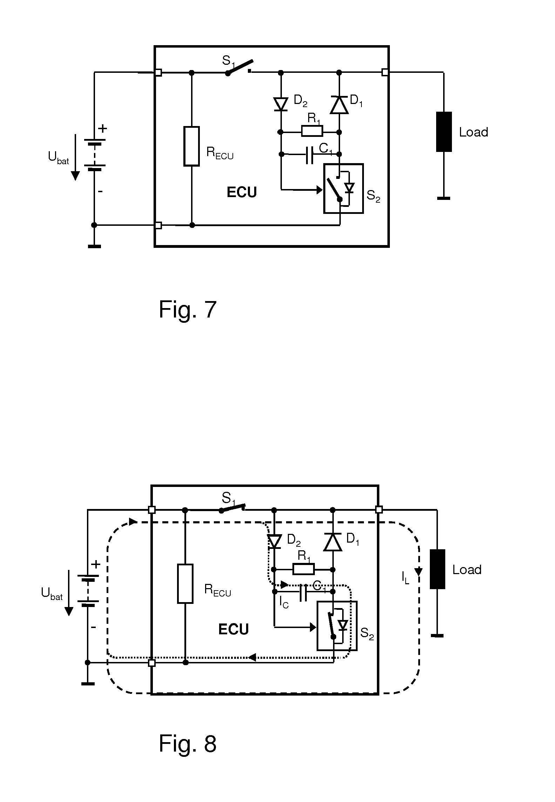

Die Fig. 7 zeigt eine erfindungsgemäße Schaltungsanordnung mit dynamischem Freilauf. Im Falle eines Masseabrisses an einem Steuergerät (ECU) mit einpoligem Lastanschluss kann eine an das Steuergerät angeschlossene Last über deren Freilaufvorrichtung, wie beispielsweise eine einzige Diode, ungewollt aktiviert werden. Die hier dargestellte Schaltungsanordnung verhindert dies.

Dabei ist zusätzlich eine in Durchlassrichtung betriebene Diode in Reihe zu einem Kondensator C₁ geschaltet, der einen parallel geschalteten Widerstand R₁ aufweist. In Reihe zu der in Sperrrichtung geschalteten Freilaufdiode D₁ ist neben dem Schalter S₁ ein weiterer Schalter S₂ vorgesehen, der mit einer ebenfalls in Durchlassrichtung geschalteten Diode überbrückt ist.

In Fig. 8 ist der reguläre Stromfluss I_{L} bei einpoligem Lastanschluss mit dynamischem Freilauf durch die gestrichelte Linie dargestellt. Beim Aktivieren der Last wird gleichzeitig der Kondensator C₁ durch einen weiteren Stromfluss I_{C} geladen, wie die gepunktete Linie verdeutlicht.

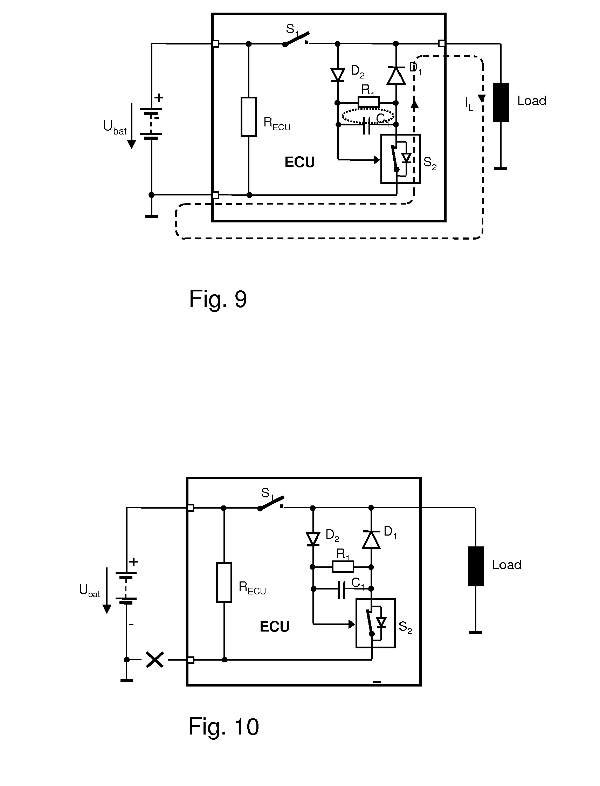

Nach Fig. 9 ist der Stromfluss I_{L} im dynamischen Freilauf bei einpoligem Lastanschluss durch die gestrichelte Linie dargestellt. Dabei ist der Freilauf nur solange aktiviert, bis der Kondensator C₁ über den Widerstand R₁ entladen ist, wie die gepunktete Linie zeigt. Die Dimensionierung von C₁ und R₁ ist dabei so gewählt, dass die entsprechende Zeitkonstante, die sich bildet aus C₁*R₁, größer ist als die Zeitkonstante, die die induktive Last mit L_{L}/R_{L} darstellt.

Gemäß Fig. 10 ist die Betriebssituation während Masseabriss bei einpoligem Lastanschluss mit dynamischem Freilauf dargestellt. Nachdem der Kondensator C₁ entladen ist, öffnet der Schalter S₂ und der Stromfluss ist unterbrochen. Im Falle eines Masseabrisses kann kein ungewollter Strom zur Last abfließen.

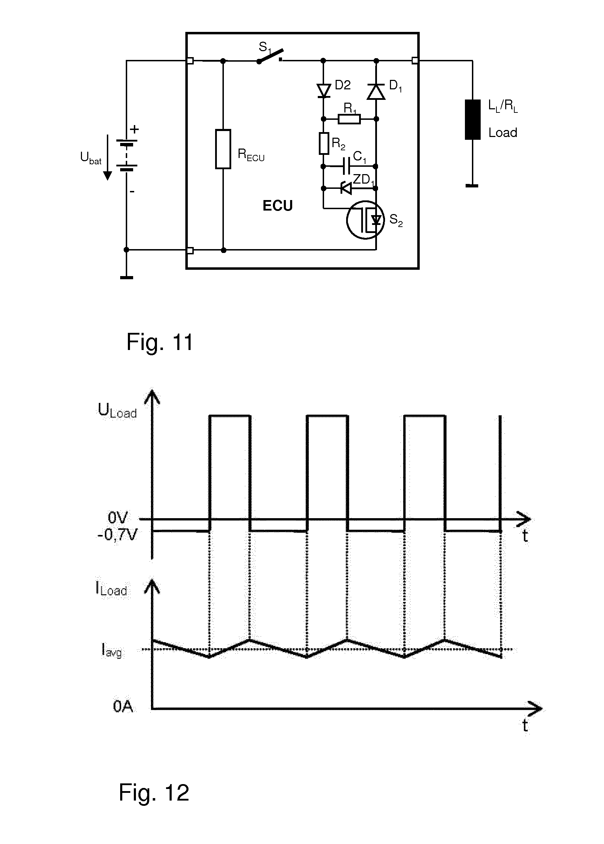

In Figur 11 ist eine mögliche Schaltungsausführung mit dynamischem Freilauf dargestellt. Als Schalter S₂ kann ein herkömmlicher N-Kanal MOS-Fet Transistor verwendet werden. Eine Zenerdiode ZD₁ dient zur Begrenzung der Gatespannung, die typischerweise 20V nicht übersteigen darf. Der Ladevorgang des Kondensators C₁ erfolgt mit der Zeitkonstante t_{charge} = R₂*C₁, der Entladevorgang dagegen mit der Zeitkonstante t_{discharge}=(R₁+R₂)*C₁.

Dabei gelten folgende Dimensionierungsregeln:

Die Freilaufdiode D₁ und der Schalter S₂ müssen so gewählt werden, dass sie den eingeprägten Strom in die angeschlossene Last während des Freilaufs (Demagnetisierungsphase) tragen können. Die Zeitkonstante t_{charge} zum Laden des Kondensators C₁ muss kleiner sein als die minimale Einschaltdauer des Schalters S₁. Dies wird auch als "minimum duty cycle" bezeichnet. Die Zeitkonstante t_{discharge} muss größer sein als die Zeitkonstante, die durch die induktive Last vorgegeben wird, also: (R₁+R₂)*C₁ > L_{L}/R_{L}.

Bei der puls-weiten-modulierten Ansteuerung, dem so genannten PWM-Betrieb, der induktiven Last, fließt in ihr ein dreieckförmiger Strom I_{Load} dessen Mittelwert l_{avg} proportional der Pulsbreite ist. Dies wird dadurch bewirkt, dass nach dem Öffnen des Schalters S1 der Laststrom durch den Freilaufzweig, der durch die in Reihe mit dem Schalter S2 angeordnete Freilaufdiode D1 solange weiterfließt, bis entweder die Induktivität demagnetisiert ist, oder der Schalter S1 wieder eingeschaltet wird. Während der Demagnetisierung der Induktivität bewirkt die Durchlassspannung der Freilaufdiode D1 an der Last eine Spannung von typischen U_{Load} = -0,7V.

Der Freilaufzweig ist derart auszuführen, dass zum einen die einpolig angeschlossene induktive Last mit PWM betrieben werden kann, und zum anderen nach einem eventuellen Abriss der Masseleitung des Steuergerätes kein ungewollter Strom zur Last abfließt.

Bevorzugt wird eine solche Schaltungsanordnung in einem Kraftfahrzeug zur Steuerung induktiver Verbraucher, insbesondere zur Steuerung von Magnetventilen einer Differenzialsperre oder eines automatischen Getriebes, verwendet.

## Patentansprüche

1. Schaltungsanordnung zum Schalten eines induktiven Verbrauchers mittels eines ersten Schalters (S₁) umfassend eine Freilaufdiode (D₁), die in Reihe zu einem zweiten elektronischen Schalter (S₂) geschaltet ist, sowie einen Kondensator (C₁), der über eine weitere Diode (D₂) in Durchlassrichtung ladbar ist, wobei zu dem Kondensator (C₁) ein Widerstand (R₁) parallel geschaltet und die Schaltungsanordnung derart ausgebildet ist, dass der Kondensator (C₁) geladen wird, wenn der erste Schalter (S₁) geschlossen ist und entladen wird, wenn der erste Schalter (S₁) geöffnet wird.

2. Schaltungsanordnung nach Anspruch 1, **dadurch gekennzeichnet, dass** nach dem Öffnen des ersten Schalters (S1) der zweiten Schalter (S2) solange geschlossen bleibt, bis die in einer angeschlossenen induktiven Last gespeicherte Energie über die Freilaufdiode (D1) in Reihe mit dem zweiten Schalter (S2) entladen ist.

3. Schaltungsanordnung nach Anspruch 1 oder 2, **dadurch gekennzeichnet, dass** eine angeschlossene induktive Last in einem kontinuierlich pulsweiten modulierten Betrieb (PWM) betreibbar ist.

4. Schaltungsanordnung nach einem der Ansprüche 1 bis 3 zum Betrieb eines Steuergeräts in einem Kraftfahrzeug.

5. Verwendung einer Schaltungsanordnung nach Anspruch 1 in einem Kraftfahrzeug zur Steuerung induktiver Verbraucher insbesondere zur Steuerung von Magnetventilen einer Differenzialsperre oder eines automatischen Getriebes.
